Europäisches Patentamt

European Patent Office

Office européen des brevets

(19)

(11) **EP 0 731 577 A1**

(12) **DEMANDE DE BREVET EUROPEEN**

(43) Date de publication:
11.09.1996 Bulletin 1996/37

(51) Int. Cl.⁶: **H04L 1/12**, H04L 5/14

(21) Numéro de dépôt: 96200491.7

(22) Date de dépôt: 26.02.1996

(84) Etats contractants désignés:
**DE FR GB**

(30) Priorité: **08.03.1995 FR 9502711**

(71) Demandeurs:
- **PHILIPS COMMUNICATION D'ENTREPRISE**
  **75013 Paris (FR)**
  Etats contractants désignés:
  **FR**
- **PHILIPS ELECTRONICS N.V.**
  **5621 BA Eindhoven (NL)**
  Etats contractants désignés:
  **DE GB**

(72) Inventeurs:
- **Lepitre, Didier**
  **F-75008 Paris (FR)**
- **Gonnet, Caroline**
  **F-75008 Paris (FR)**

(74) Mandataire: **Chaffraix, Jean et al**
**Société Civile S.P.I.D.**
**156, Boulevard Haussmann**
**75008 Paris (FR)**

(54) **Système de transmission de données à débit multiple**

(57) Ce système de transmission entre des dispositifs d'extrémités (1) et (2) est prévu pour transmettre des informations avec un certain débit binaire commun. Ce débit binaire dépend d'un rythme symbole et d'une fréquence porteuse. Par un traitement effectué par un processeur (9) coopérant avec une mémoire d'instructions (10), on détermine le plus grand débit binaire possible pour l'échange d'informations entre des dispositifs d'extrémités.

Application : modems rapides.

FIG. 2

EP 0 731 577 A1

## Description

La présente invention concerne un système de transmission comportant au moins deux dispositifs d'extrémités qui sont reliés par un milieu de transmission pour transmettre entre eux des informations à un débit d'éléments binaires selon au moins un rythme de symbole et au moins une fréquence porteuse, système comportant des moyens d'analyse du milieu de transmission pour analyser la qualité de transmission dudit milieu.

L'invention concerne aussi un modem convenant à un tel système.

Les tendances actuelles en transmission sont d'utiliser des débits de transmission de plus en plus élevés. Cependant, ces débits ne sont pas toujours assurés car les milieux de transmission sont soumis à des perturbations qui gênent cette transmission et souvent, on doit alors choisir des débits moindres, moins sensibles aux perturbations.

Se pose donc le problème de l'adaptation du débit de transmission entre 2 modems (un modem local et un modem distant), en fonction de la qualité de la ligne et des capacités de débit des modems. Ceci est décrit dans le document de brevet européen n° 0 643 507 déposé le 6 septembre 1994. Bien que donnant entière satisfaction, le système connu n'est plus adapté aux nouvelles normes applicables aux modems, on pense notamment à la norme V34 du CCITT qui, pour certains débits, propose des combinaisons multiples de fréquences porteuses et de fréquences baud.

Pour résoudre ces problèmes, un système de transmission tel que décrit dans le préambule est remarquable en ce qu'il comporte :

- des moyens de définition de débit pour fournir une première série d'informations définissant pour chacun des dispositifs d'extrémité une pluralité de débits, compatibles avec la qualité de transmission, fonction d'un rythme baud et d'une fréquence porteuse,
- des premiers moyens de sélection pour sélectionner les combinaisons de rythme baud et de fréquence porteuse pour lesquelles la valeur (dmax) fournie par les moyens de définition de débit est maximale,
- des premiers moyens d'échange entre les deux dispositifs d'extrémité pour échanger les combinaisons fournies par les premiers moyens de sélection,
- des deuxièmes moyens de sélection pour sélectionner un rythme baud d'un certain couple de combinaison parmi des couples de combinaisons formées par les combinaisons locales et échangées,
- des troisièmes moyens de sélection pour choisir un premier débit et un deuxième débit à partir du premier couple,
- des quatrièmes moyens de sélection pour déterminer un troisième débit (dcom) à partir des premier et deuxième débits.

La description suivante, faite en regard des dessins ci-annexés, le tout donné à titre d'exemple non limitatif, fera bien comprendre comment l'invention peut être réalisée.

La figure 1 montre un système de transmission conforme à l'invention.
La figure 2 représente un bloc fonctionnel du système de l'invention.

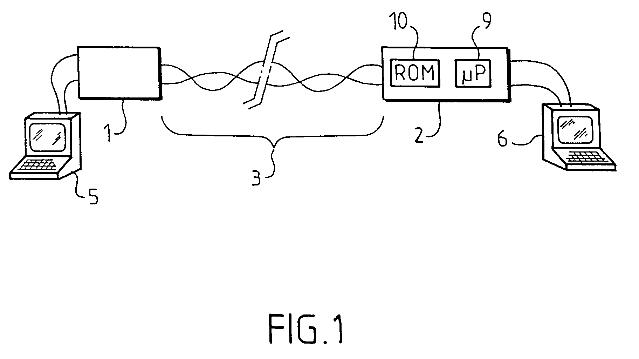

Le système montré à la figure 1 est formé de deux modems 1 et 2 qui sont reliés à une ligne téléphonique 3. Ces modems permettent à deux terminaux 5 et 6 d'échanger des données. Dans le cadre de l'exemple décrit, on se réfère à la norme V34 précitée.

Selon cette norme, on a différents rythmes baud avec les fréquences porteuses associées qui sont données dans le TABLEAU I ci-dessous.

TABLEAU I

| Rythme baud | Fréquence basse | Fréquence haute |
|---|---|---|
| 2400 | 1600 | 1800 |
| 2743 | 1646 | 1829 |
| 2800 | 1680 | 1867 |
| 3000 | 1800 | 2000 |
| 3200 | 1829 | 1920 |
| 3429 | 1959 | 1959 |

Aux différents rythmes baud, on peut avoir une pluralité de vitesses de transmission données dans le TABLEAU II ci-dessous.

TABLEAU II

| Débit ↓ | VITESSE SYMBOLE | | | | | |
|---|---|---|---|---|---|---|
| | 2400 | 2743 | 2800 | 3000 | 3200 | 3429 |
| 2400 | x | | | | | |
| 4800 | x | x | x | x | x | x |
| 7200 | x | x | x | x | x | x |
| 9600 | x | x | x | x | x | x |
| 12000 | x | x | x | x | x | x |
| 14400 | x | x | x | x | x | x |
| 16800 | x | x | x | x | x | x |
| 19200 | x | x | x | x | x | x |
| 21600 | x | x | x | x | x | x |
| 24000 | | x | x | x | x | x |
| 26400 | | | | x | x | x |
| 28800 | | | | | x | x |
| 32000 | | | | | | x |

Les croix du tableau ci-dessus indiquent les vitesses symboles associées aux débits.

Il y a donc plusieurs combinaisons qui procurent un même débit. On cherche alors à satisfaire les contraintes suivantes :

- le débit de transmission chosi doit être maximal,
- le débit de transmission choisi doit appartenir à une fourchette de débits qu'impose l'utilisateur,
- les débits de transmission sont identiques dans les deux sens de transmission,
- le débit de transmission choisi doit assurer un fonctionnement d'erreur minimal.

Les moyens pour satisfaire à ces contraintes sont constitués par un procédé mis en oeuvre par un processeur 9 pour le modem 2 et défini par des codes de commande de ce processeur, contenus dans une mémoire à lecture seule 10. Le modem peut avoir une structure semblable à celle du modem 2.

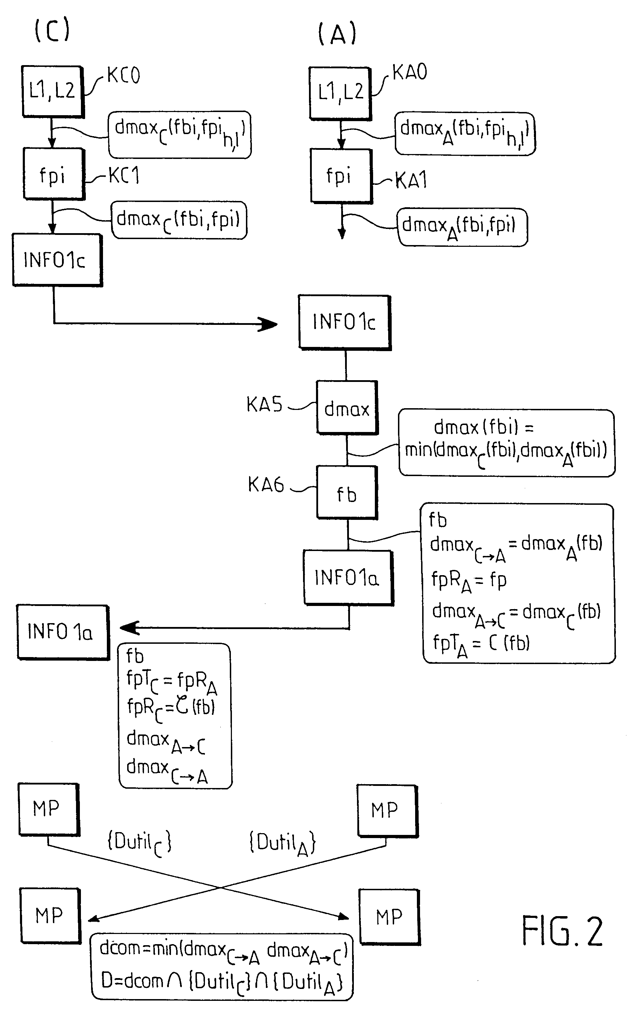

On se reporte maintenant à la figure 2 qui montre les différentes fonctions de ce procédé. On distingue le modem appelant (C) et le modem appelé (A).

**PREMIERE ETAPE**

Pour la mise en oeuvre de l'invention, on utilise la séquence de test qui, à partir des séquences de signaux L1 et L2 (voir la norme V34), permet de déterminer la fonction de transfert de la ligne qui relie les modems 1 et 2 et les rapports signal/bruit de cette ligne. De cette fonction de transfert, on détermine pour chaque combinaison rythme-baud/porteuse un débit de transmission maximum relativement à la ligne. Le brevet américain n° 4 633 411 donne toutes précisions concernant l'analyse des lignes de transmission.

On obtient, en sortie des cases KC0 et KA0, pour chaque modem qui a reçu la séquence de signaux L1 et L2 une liste de débits de transmission maximum $dmax_C$ et $dmax_A$, fonction de la fréquence baud ($fb_i$) et de la porteuse haute ou basse ($fpi_h$ ou $fpi_l$), soit pour chacun des modems :

$dmax_C$ ($fb0, fp0_l$)
$dmax_C$ ($fb0, fp0_h$)
$dmax_C$ ($fb1, fp1_l$)
$dmax_C$ ($fb1, fp1_h$)
..... ........

$dmax_C$ (fbn,$fpn_h$)

et

$dmax_A$ (fb0,$fp0_l$)
$dmax_A$ (fb0,$fp0_h$)
$dmax_A$ (fb1,$fp1_l$)
$dmax_A$ (fb1,$fp1_h$)
..... ........
$dmax_A$ (fbn,$fpn_h$)

De cette première liste de débits, on retient ceux dont les fréquences porteuses sont associées aux débits les plus élevés en utilisant la méthode suivante :

Si $dmax$ (fbi,$fpi_h$) $\geq$ $dmax$ (fbi,$fpi_l$)

alors :    $dmax_X$ = $dmax$ (fbi,$fpi_h$)
            fpi = $fpi_h$
sinon :    $dmax_X$ = $dmax$ (fbi,$fpi_l$)
            fpi = $fpi_l$

avec $0 \leq i \leq 5$.

L'indice X représente C ou A, selon que l'on considère le modem appelant ou le modem appelé. Cette deuxième liste est obtenue à la fin des cases KC1 et KA1.

### a) Cas du modem appelant

Le modem appelant doit élaborer le bloc d'informations INFO1c. Ainsi, parmi les 109 éléments binaires de ce bloc INFO1c représentés par b0 à b108, en se basant sur la deuxième liste on fera les insertions suivantes :

b25 = fp0
b30...35 = $dmax_C$ (fb0,fp0)
b34 = fp1
b39...42 = $dmax_C$ ...
...................
b70 = fp5
b75...78 = $dmax_C$ (fb5, fp5)

Le modem va aussi recueillir les 70 éléments binaires b'1 à b'69 du bloc, qui est formé d'informations INFO1a élaborées par le modem appelé, et qui est transmis par ce dernier. Les éléments binaires b'34...36 de ce bloc donnent le rythme baud fb, la fréquence porteuse d'émission fpT donnée par l'élément binaire b'25 est la fréquence réception $fpR_A$ du modem appelé. Une combinaison $\mathbb{C}$ définie ci-dessous détermine la fréquence de réception $fpR_C$ du modem appelant et aussi deux débits maximum $dmax_{A \to C}$ et $dmax_{C \to A}$ pour les deux sens de transmission.

### b) Cas du modem appelé

Les différentes informations $dmax_C$(fbi,fpi) transmises dans le bloc INFO1c depuis le modem appelant sont combinées avec celles, $dmax_A$(fbi,fpi), élaborées par le modem appelé. Le modem appelé cherche, pour chaque fréquence baud, le minimum des débits maximum dans les deux sens (case KA5) :

$dmax$(fbi) = min {$dmax_C$(fbi, $fpi_C$), $dmax_A$(fbi, $fpi_A$)}

Il détermine ensuite, par le traitement indiqué à la case KA6 le rythme baud qui correspond au plus grand des $dmax$(fbi) soit $dmax_{C \to A}$. S'il existe plusieurs rythmes baud qui donnent des valeurs $dmax$($fb_i$) égales, on choisit le rythme baud le plus élevé, soit fb ce rythme, et on retient la combinaison $\mathbb{C}$ (fb,$fpi_A$ et $fpi_C$) qui donne la valeur fb pour la valeur dmax retenue.

Il y a toutefois deux restrictions à ce traitement :

1 - Si, pour toutes les fréquences baud, le débit maximal est le débit minimal utilisable pour chaque fréquence baud considérée, le rythme baud choisi est le plus faible, avec de préférence la porteuse haute.
2 - Si l'utilisateur choisit 2400 eb/s comme unique débit de transmission, on force le rythme baud à 2400 Hz avec porteuse haute, quel que soit le résultat des autres tests.

La fréquence porteuse $fpR_A$ de réception du modem appelé est la fréquence $fpi_A$ de ladite combinaison $\mathbb{C}$.
La fréquence porteuse d'émission $fpT_A$ est la fréquence $fpi_C$ de ladite combinaison $\mathbb{C}$.
Le débit $dmax_{A \to C}$ est donné par $dmax_C$(fb,$fpi_C$).

Le bloc INFO1a va être construit de la manière suivante :

b'25 = fpR$_A$
b'30...33 = dmax$_{C \to A}$
b'34...36 = fb
b'37...39 = dmax$_{A \to C}$

**DEUXIEME ETAPE** (phase 4 de la procédure de synchronisation)

A la fin de la phase 2, chaque modem a comme informations :

$$
A \left\{ \begin{array}{l} \text{fb} \\ \text{fpi}_A \\ \text{dmax}_{C \to A} \\ \text{dmax}_{A \to C} \end{array} \right.
\qquad
B \left\{ \begin{array}{l} \text{fb} \\ \text{fpi}_C \\ \text{dmax}_{A \to C} \\ \text{dmax}_{C \to A} \end{array} \right.
$$

Chacun de ces modems dispose donc du rythme baud, d'une porteuse propre et du débit maximal. Les utilisateurs de chacun des modems peuvent décider des débits qu'ils veulent utiliser. Soit {Dutil$_C$} l'ensemble des débits que l'utilisateur du modem appelant veut utiliser et {Dutil$_A$} l'ensemble des débits que l'utilisateur du modem appelé veut utiliser. Ces débits sont transmis dans des blocs MP par les éléments binaires b"35...39 de ce bloc formé de 188 éléments. Le débit dmax$_{C \to A}$ est aussi transmis par les éléments binaires b"20...23 et le débit dmax$_{A \to C}$ par les éléments b"24...27. Si ces débits dmax$_{C \to A}$ et dmax$_{A \to C}$ sont inférieurs au débit minimal préconisé par l'utilisateur, on les force à cette dernière valeur :

si dmax$_{C \to A}$ < min {Dutil$_X$}
alors dmax$_{C \to A}$ = min {Dutil$_X$}
et
si dmax$_{A \to C}$ < min {Dutil$_X$}
alors dmax$_{A \to C}$ = min {Dutil$_X$}

L'indice X représente A ou C, selon que l'on considère le modem appelant ou le modem appelé. A partir de ces blocs reçus, les modems appelé et appelant effectuent les mêmes calculs.

On détermine tout d'abord le débit maximal commun d$_{com}$ :

d$_{com}$ = min [(dmax$_{C \to A}$, dmax$_{A \to C}$)].

Si d$_{com}$ est inférieur au débit minimal préconisé par l'utilisateur du modem distant Y, on le force à cette dernière valeur :

si d$_{com}$ < min {Dutil$_Y$}
alors d$_{com}$ = min {Dutil$_Y$}

L'indice Y représente le modem distant (C ou A).

On détermine ensuite le plus grand débit possible utilisable par les deux modems :

D = d$_{com}$ $\cap$ {Dutil$_C$} $\cap$ {Dutil$_A$}

Si cette intersection est vide les modems ne se connectent pas.

Si D = 2400 eb/s et que ce débit n'est pas supporté par la combinaison (rythme-baud/porteuse) sélectionnée, les modems se resynchronisent avec des paramètres forcés :

D = 2400 eb/s
Fréquence baud = 2400 Hz
Fréquence porteuse (haute) = 1800 Hz.

**Revendications**

**1.** Système de transmissmion comportant au moins deux dispositifs d'extrémités qui sont reliés par un milieu de transmission pour transmettre entre eux des informations à un débit d'éléments binaires selon au moins un rythme de symbole et au moins une fréquence porteuse, système comportant des moyens d'analyse du milieu de transmission pour analyser la qualité de transmission dudit milieu, système caractérisé en ce qu'il comporte :

- des moyens de définition de débits pour fournir une première série d'informations définissant pour chacun des dispositifs d'extrémité une pluralité de débits, compatibles avec la qualité de transmission, fonction d'un rythme baud et d'une fréquence porteuse,
- des premiers moyens de sélection pour sélectionner les combinaisons de rythme baud et de fréquence porteuse pour lesquelles la valeur (dmax) fournie par les moyens de définition de débit est maximale,
- des premiers moyens d'échange entre les deux dispositifs d'extrémité pour échanger les combinaisons fournies par les premiers moyens de sélection,
- des deuxièmes moyens de sélection pour sélectionner un rythme baud d'un certain couple de combinaison parmi des couples de combinaisons formées par les combinaisons locales et échangées,
- des troisièmes moyens de sélection pour choisir un premier débit et un deuxième débit à partir du premier couple,
- des quatrièmes moyens de sélection pour déterminer un troisième débit (dcom) à partir des premier et deuxième débits.

2. Système de transmission selon la revendication 1, caractérisé en ce qu'il comporte en outre :

- des deuxièmes moyens d'échange pour échanger entre lesdits dispositifs d'extrémité des débits utilisateurs,
- des cinquièmes moyens de sélection pour déterminer un quatrième débit.

3. Modem convenant à un tel système et constituant au moins un desdits dispositifs d'extrémité.

4. Modem selon la revendication 3, caractérisé en ce qu'il est compatible avec la norme V34.

FIG.1

FIG. 2

Office européen
des brevets

**RAPPORT DE RECHERCHE EUROPEENNE**

Numero de la demande

EP 96 20 0491

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | EP-A-0 513 527 (MOTOROLA INC.)<br>* abrégé *<br>* colonne 2, ligne 20 - colonne 3, ligne 33 *<br>* colonne 5, ligne 38 - colonne 6, ligne 11 *<br>* colonne 7, ligne 28 - colonne 8, ligne 1 *<br>* colonne 11, ligne 24 - ligne 32 *<br>* colonne 12, ligne 50 - colonne 13, ligne 26; revendications 1,4,7 *<br>--- | 1-4 | H04L1/12<br>H04L5/14 |
| A | US-A-5 297 186 (DONG)<br>* abrégé *<br>* colonne 2, ligne 24 - ligne 34 *<br>* colonne 5, ligne 5 - colonne 7, ligne 29 *<br>--- | 1-4 | |
| A | EP-A-0 137 928 (INTERNATIONAL BUSINESS MACHINES CORPORATION)<br>* abrégé; revendications *<br>--- | 1-4 | |
| A | EP-A-0 637 150 (AT & T CORP.)<br>* abrégé *<br>* colonne 1, ligne 1 - colonne 3, ligne 12 *<br>---<br><br>-/-- | 1-4 | **DOMAINES TECHNIQUES RECHERCHES (Int.Cl.6)**<br><br>H04L |

Le présent rapport a été établi pour toutes les revendications

| Lieu de la recherche | Date d'achèvement de la recherche | Examinateur |
|---|---|---|
| LA HAYE | 25 Avril 1996 | Gries, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**Office européen des brevets**

**RAPPORT DE RECHERCHE EUROPEENNE**

Numero de la demande

EP 96 20 0491

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | ITU-T RECOMMENDATION V.34. DATA COMMUNICATION OVER THE TELEPHONE NETWORK, Septembre 1994, GENEVA, CH, pages 1-63, XP000567317 INTERNATIONAL TELECOMMUNICATION UNION: "A Modem Operating at Data Signalling Rates of up to 28800 bit/s for use on the General Switched Telephone Network and on Leased Point-to-point 2-Wire Telephone-type circuits." * page 4, alinéa 1 - dernier alinéa; tableaux 1,2 * * page 26, alinéa 10.1.2.3 - page 30, dernier alinéa * * page 28 - page 30; tableaux 14-16 * ----- | 1-4 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 25 Avril 1996 | Gries, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant